# EUROPÄISCHE PATENTSCHRIFT

(11) **EP 3 248 665 B1**
(45) Veröffentlichungstag und Bekanntmachung des Hinweises auf die Patenterteilung: **29.01.2020**
(21) Anmeldenummer: 17169034.0
(22) Anmeldetag: 02.05.2017
(51) Int. Cl.: B01D 46/00, B01D 46/10

(54) **FILTERANORDNUNG**
FILTER ASSEMBLY
AGENCEMENT DE FILTRE

(30) Priorität: 18.05.2016 DE 102016006042
(43) Veröffentlichungstag der Anmeldung: 29.11.2017
(73) Patentinhaber: Mann+Hummel GmbH, 71636 Ludwigsburg (DE)
(72) Erfinder: KÜMMERLING, Volker, 74321 Bietigheim-Bissingen (DE); JESSBERGER, Thomas, 71679 Asperg (DE); WEBER, Andreas, 71691 Freiberg a. N. (DE); METZGER, Michael, 71334 Waiblingen (DE); GAU, Bernhard, 71636 Ludwigsburg (DE); SHEN, Naihe, 70736 Fellbach (DE); COLLETTO, Calogero, 70794 Filderstadt (DE); JANNER, Achim, 71638 Ludwigsburg (DE)
(74) Vertreter: Seyboth, Matthias

(56) Entgegenhaltungen:
- WO-A1-2009/150165
- DE-A1-102011 015 062
- US-A- 5 295 602

## Beschreibung

### Technisches Gebiet

Die vorliegende Erfindung betrifft eine Filteranordnung, insbesondere eine Luftfilteranordnung.

### Stand der Technik

Aus der DE 196 25 443 A1 ist ein Filtergehäuse für ein austauschbares plattenförmiges Filterelement bekannt, das aus einem ersten und einem zweiten Gehäuseteil besteht. Eine um das Filterelement umlaufende Dichtung ist dabei axial zwischen den Gehäuseteilen verpresst. Die WO 2009/150167 A1 und die WO2009/150165A1 offenbaren ein Filtergehäuse für ein Filtereinsatzteil, bei dem zwei zusammengesetzte Gehäuseteile über eine Rastverbindungseinrichtung lösbar aneinander gekoppelt sind. Zusätzlich sind zur Erhöhung der Sicherheit miteinander fluchtende Verbindungsausnehmungen in die Gehäuseteile eingebracht, die zur Aufnahme von zusätzlichen Verbindungselementen vorgesehen sind. Als Verbindungselemente sind insbesondere Schrauben genannt. Bei der WO 2009/150167 A1 wird eine das Filterelement umlaufende Dichtung radial verpresst. Deshalb werden sowohl Rastverbindungen, wie auch miteinander fluchtende Verbindungen mit Verbindungselementen benötigt.

Die DE102011015062A1 zeigt ein Filtergehäuse eines Luftfilters mit wenigstens zwei Gehäuseteilen, die öffenbar miteinander verbunden werden können. Wenigstens ein Verschlusselement zum Zusammenhalten der beiden Gehäuseteile ist zumindest bis zu einem ersten Zusammenbau der beiden Gehäuseteile über eine bewegliche Verbindung an einem ersten der Gehäuseteile befestigt. Die bewegliche Verbindung weist eine Sollbruchstelle auf. Das Verschlusselement weist wenigstens einen Elementrastabschnitt auf, der im Schließzustand des Verschlusselements mit einem Gehäuserastabschnitt an einem der Gehäuseteile verrastet.

Der US5295602A ist ein Motorluftfiltergehäuse mit einem Schnappverschluss zu entnehmen, der einen Gehäusedeckel an einem Gehäuseunterteil sichert. Um einen Schnappverschluss zu bilden, hat das Gehäuseunterteil eine Stützwand, ein Paar seitlicher Vorsprünge an gegenüberliegenden Enden der Stützwand und eine Querstrebe, die die seitlichen Vorsprünge miteinander verbindet. Die Stützwand, die seitlichen Vorsprünge und die Querstrebe definieren eine rechteckige Öffnung, die eine U-förmige Lasche aufnimmt, die sich von dem Gehäusedeckel erstreckt.

### Offenbarung der Erfindung

Es ist daher Aufgabe der vorliegenden Erfindung, eine verbesserte Filteranordnung zur Verfügung zu stellen.

Demgemäß wird eine Filteranordnung mit einem Filtergehäuse mit einem darin aufgenommenen Filterelement vorgeschlagen, wobei dem Filterelement ein das Filterelement umlaufendes Dichtelement zugeordnet ist. Das Filtergehäuse umfasst ein erstes Gehäuseteil und ein zweites Gehäuseteil, welche in einer axialen Montagerichtung zusammenfügbar und voneinander trennbar sind. Dabei bilden ein erster Randabschnitt des ersten Gehäuseteils und ein zweiter Randabschnitt des zweiten Gehäuseteils einen Aufnahmebereich für das Dichtelement derart, dass das Dichtelement zwischen den Randabschnitten radial eingespannt ist. Es ist ferner eine Schnappverbindungsvorrichtung zum axialen Verspannen der Gehäuseteile vorgesehen, welche derart an dem Gehäuseteil angeformt ist, dass eine mit Hilfe der Randabschnitte auf das Dichtelement radial wirkende Anpresskraft oder Klemmkraft von der Schnappverbindungsvorrichtung entkoppelt ist.

Die beiden Gehäuseteile lassen sich einfach mit Hilfe der Schnappverbindungsvorrichtung axial miteinander koppeln und entkoppeln. Durch die Entkoppelung von radial wirkenden Anpresskräften, die beispielsweise durch einen Rahmen oder durch Randabschnitte der Gehäuseteile auf die Dichtung ausgeübt werden, von Kräften, die aufgrund der axialen Montage an der Schnappverbindungsvorrichtung auftreten, kann letztere besonders einfach ausgeführt werden.

In Ausführungsformen ist das jeweilige Gehäuseteil und der jeweilige Teil der Schnappverbindungsvorrichtung materialeinstückig, insbesondere aus einem Kunststoffmaterial, gebildet.

Vorzugsweise werden die Gehäuseteile ausschließlich mithilfe der Schnappverbindungsvorrichtung axial aneinandergehalten. In Ausführungsformen können jedoch auch weitere Haltemittel vorgesehen werden.

Außerdem gewinnt man durch die Entkoppelung der Dichtkräfte von den Verspannkräften für die Gehäuseteile eine bessere Robustheit der Schnappverbindungsvorrichtung. Diese kann beispielsweise ausreichend flexibel oder elastisch ausgeführt werden, damit auch bei tiefen Temperaturen das eingesetzte Material nicht zu spröde wird und unter der Verformung bei Ein- und Ausbau des Filterelements nicht reißt.

In Ausführungsformen sind das Filtergehäuse und die Schnappverbindungsvorrichtung aus einem Kunststoffmaterial gefertigt, das bei tiefen Temperaturen, beispielsweise unterhalb von 0 °C, spröde wird. Durch die Entkoppelung der Klemmkräfte von den Verspannungskräften in radialer beziehungsweise axialer Richtung am Gehäuse, wird die Montagesicherheit verbessert.

In erfindungsgemäßen Ausführungsformen des Filtergehäuses ist ein dem ersten Randabschnitt zugeordneter federnder Schnapphaken der Schnappverbindungsvorrichtung derart radial von dem ersten Randabschnitt nach außen beabstandet, dass eine durch den Randabschnitt auf das Dichtelement radial nach innen gerichtete Anpresskraft oder Klemmkraft von dem Schnapphaken entkoppelt ist.

Ein Schnapphaken kann insbesondere derart flexibel und radial beweglich vorgesehen werden, dass von den Gehäuseteilen beziehungsweise den Randabschnitten auf das Dichtelement wirkende Kräfte nicht auf den Schnapphaken übertragen werden. Dadurch wird der Schnapphaken weniger beansprucht und hat eine höhere Lebensdauer. In Ausführungsformen ist der Schnapphaken radial federnd ausgestaltet. Alternativ oder zusätzlich kann der Schnapphaken auch axial federnd ausgestaltet sein.

Der erste und der zweite Randabschnitt umfassen zum Beispiel einen umlaufenden Dichtsteg. Die Dichtstege sind dann im Montagezustand derart radial versetzt und begrenzen den Aufnahmebereich, dass das Dichtelement radial zwischen den Dichtstegen verklemmt ist. Es erfolgt insofern eine radiale Abdichtung mit Hilfe des Dichtelements und der Dichtstege. Zusätzlich können optional axiale Kräfte auf das Dichtelement übertragen werden. Dazu können zum Beispiel in oder auf dem Aufnahmebereich auskragende Stege oder Dichtkonturen vorgesehen werden.

In Ausführungsformen umfassen der erste und der zweite Randabschnitt jeweils einen umlaufenden Dichtsteg, und die Dichtstege sind derart radial versetzt, dass sie den Aufnahmebereich lateral begrenzen. Das Dichtelement ist dann zwischen den Dichtstegen verklemmt. Vorzugsweise sind die Dichtstege nicht Teil der Schnappverbindungsvorrichtung, wodurch eine zuverlässige Entkoppelung von Anpress- oder Klemmkräften für das radiale Abdichten von einem axialen Verbinden der Gehäuseteile erfolgt.

Die Schnappverbindungsvorrichtung kann in Ausführungsformen einen Schnapphaken und einen Halteabschnitt mit einer Ausnehmung umfassen. Der Schnapphaken hintergreift den Halteabschnitt im montierten Zustand vorzugsweise formschlüssig. Es ist denkbar, dass das Filtergehäuse mehrere Schnappverbindungsvorrichtungen umfasst. Vorzugsweise sind ausschließlich Schnappverbindungsvorrichtungen radial randseitig vorgesehen, um die beiden Gehäuseteile miteinander axial zu verbinden. Weitere Verbindungsmittel für die Gehäuseteile sind vorzugsweise nicht vorgesehen.

Der Schnapphaken kann insbesondere von dem äußeren Dichtsteg radial nach außen beabstandet angeordnet sein. Bei einer Beabstandung von dem Schnapphaken vom Dichtsteg ergibt sich beispielsweise durch einen Abstand eine radiale Beweglichkeit des Schnapphakens bezogen auf das Gehäuseteil.

In erfindungsgemäßen Ausführungsformen hat das Filtergehäuse einen Schnapphaken, der U-förmig ausgebildet ist. Ein U-förmig ausgebildeter Schnapphaken umfasst einen ersten Schenkel, einen Federabschnitt und einen zweiten Schenkel. Der erste Schenkel verläuft mit Hilfe eines radialen Stegs von einer Gehäusewand beabstandet axial entlang von der Gehäusewand des ersten Gehäuseteils. Der radiale Steg reduziert die Einwirkung von radialen Anpresskräften auf den Schnapphaken als Teil der Schnappverbindungsvorrichtung.

In einer bevorzugten Ausführungsform umfasst die Schnappverbindungsvorrichtung einen U-förmig ausgebildeten Schnapphaken mit einem Federabschnitt zwischen dem ersten und dem zweiten Schenkel und einen Steg, der von einer Gehäusewand beabstandet angeordnet ist und elastisch verformbar ist. In dieser Ausführungsform können Federabschnitt und Steg die Kräfte unter elastischer Verformung aufnehmen, die bei der Montage und Demontage zum Verbinden der Gehäuseteile auftreten. Eine Krafteinleitung in die Gehäusewand wird weitestgehend vermieden. Durch die zwei elastisch verformbaren Bereiche des Steges und des Federabschnittes des Schnapphakens ist eine Montage und Demontage des Filtergehäuses auch bei tiefen Temperaturen und/oder einer Versprödung des Materials ohne der Gefahr einer Beschädigung möglich.

In Ausführungsformen hat der zweite Schenkel eine Rastnase zum Eingriff in die Ausnehmung des Halteabschnitts. Außerdem drückt der erste Schenkel, der Federabschnitt und der zweite Schenkel vorzugsweise die Rastnase im montierten Zustand radial nach außen federnd in die Ausnehmung. Alternativ oder zusätzlich sind der erste Schenkel, der Federabschnitt und der zweite Schenkel derart ausgestaltet, dass die beiden Schenkel ausgehend vom montierten Zustand reversibel radial nach innen verlagert werden können, um die Rastnase aus der Ausnehmung zu verlagern.

Die Schnappverbindungsvorrichtung einer weiteren Ausführungsform ist derart ausgestaltet, dass die Rastnase bei einem Zusammenfügen der Gehäuseteile in Montagerichtung selbsttätig radial in die Ausnehmung rutscht. Beispielsweise kann die Rastnase und eine entsprechende Gegenkontur der Ausnehmung derart profiliert werden, dass die Rastnase automatisch verschnappt und hintergreift.

In weiteren Ausführungsformen hat das zweite Gehäuseteil einen von der Gehäusewand abstehenden Führungsabschnitt, welcher bei einem Zusammenfügen und/oder Trennen der der Gehäuseteile in Montagerichtung den ersten Schenkel radial nach außen drückt und/oder eine axiale Bewegung des Schnapphakens relativ zu der anderen Gehäusehälfte blockiert. Der Führungsabschnitt kann in der Art einer Rippe auf den gegenüberliegenden Schnapphaken derart einwirken, dass dieser bei einem axialen Auseinanderbewegen der Gehäuseteile in die Ausnehmung des Halteabschnitts gedrückt wird. Man kann sagen, dass der Führungsabschnitt derart blockiert wird, sodass ohne einen zusätzlichen Handhabungsvorgang der Schnapphaken nicht an der Rippe vorbeigeführt werden kann. Mit einem zusätzlichen Handhabungsvorgang wird die Rastnase aus dem Halteabschnitt bewegt und der Schnapphaken zwischen Rippe und Halteabschnitt in eine Demontageposition bewegt.

Ferner wird eine Filteranordnung mit einem Filtergehäuse, wie es zuvor oder im Folgenden erläutert wird, sowie einem Filterelement und mit einem Dichtelement vorgeschlagen. Das Dichtelement wird zum Beispiel in dem Aufnahmeraum radial verpresst, und der zweite Schenkel umfasst einen Handhabungsabschnitt zum Verlagern der Rastnase aus der Ausnehmung radial nach innen. Dadurch wird eine Entnahme des Filterelements beziehungsweise eine Demontage des Filtergehäuses durch Auseinandernehmen der beiden Gehäuseteile vereinfacht.

Vorzugsweise dient die Filteranordnung dazu, Verbrennungsluft für den Motor eines Kraftfahrzeugs zu reinigen. Denkbar sind jedoch auch andere Anwendungen. Die Filteranordnung und insbesondere das Filterelement sind vorzugsweise dazu eingerichtet, Fluide, wie beispielsweise Luft oder andere Gase, Flüssigkeiten, insbesondere flüssige Betriebsmittel eines Fahrzeugs, insbesondere eines Kraftfahrzeugs, wie Öl, Wasser, Diesel, Benzin, Kerosin oder Harnstofflösung zu filtern. Insbesondere ist das Filterelement ein Luftfilterelement. Die Filteranordnung kann Anwendung in Kraftfahrzeugen, Wasserfahrzeugen, Schienenfahrzeugen, landwirtschaftlichen Fahrzeugen, Baumaschinen, Luftfahrzeugen oder dergleichen finden. Ferner kann die Filteranordnung auch bei immobilen Anwendungen, wie beispielsweise in der Gebäudetechnik, eingesetzt werden. Das Filterelement kann ein gefaltetes Filtermedium umfassen.

Weitere mögliche Implementierungen der Filteranordnung umfassen auch nicht explizit genannte Kombinationen von zuvor oder im Folgenden bezüglich der Ausführungsbeispiele beschriebenen Merkmale oder Ausführungsformen. Dabei wird der Fachmann auch Einzelaspekte als Verbesserungen oder Ergänzungen zu der jeweiligen Grundform der Filteranordnung hinzufügen.

Weitere Ausgestaltungen der Filteranordnung sind Gegenstand der Unteransprüche sowie der im Folgenden beschriebenen Ausführungsbeispiele der Filteranordnung. Im Weiteren wird die Filteranordnung anhand von Ausführungsbeispielen unter Bezugnahme auf die beigelegten Figuren näher erläutert.

### Kurze Beschreibung der Zeichnungen

Es zeigen dabei:
- Fig. 1, 2:: perspektivische Ansichten eines Gehäuseteils einer Ausführungsform eines Filtergehäuses;
- Fig. 3, 4:: Schnittansichten einer Ausführungsform eines Filtergehäuses und einer Filteranordnung mit dem Gehäuseteil gemäß der Fig. 1 und 2; und
- Fig. 5 - 8:: perspektivische Ansichten und Schnittansichten einer Ausführungsform einer Schnappverbindungsvorrichtung für das Filtergehäuse gemäß der Fig. 3 und 4.

In den Figuren bezeichnen dieselben Bezugszeichen gleiche oder funktionsgleiche Elemente, soweit nichts Gegenteiliges angegeben ist.

### Ausführungsform(en) der Erfindung

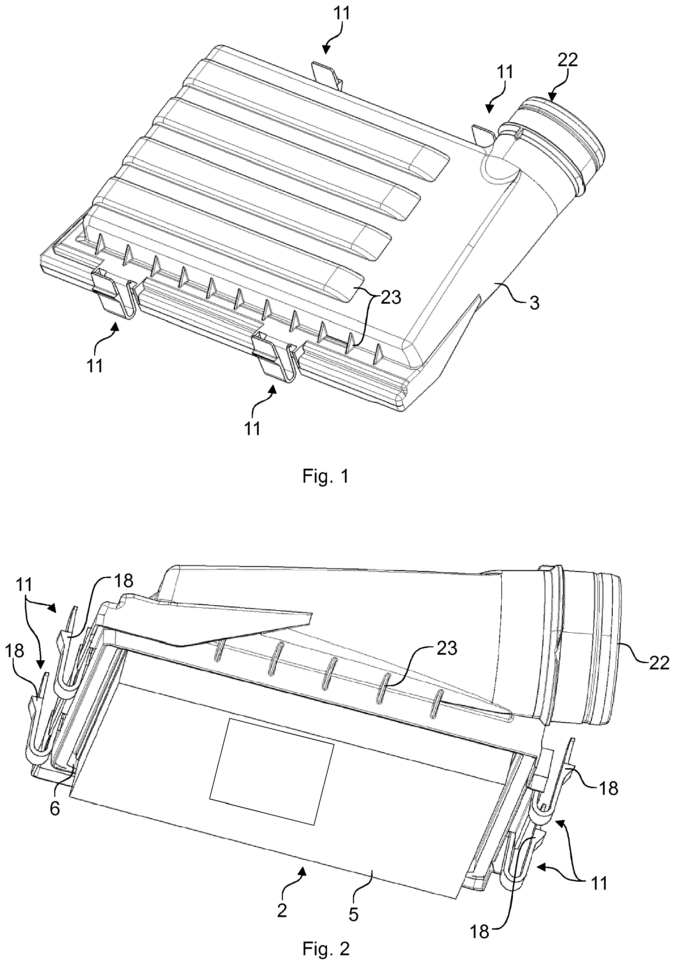

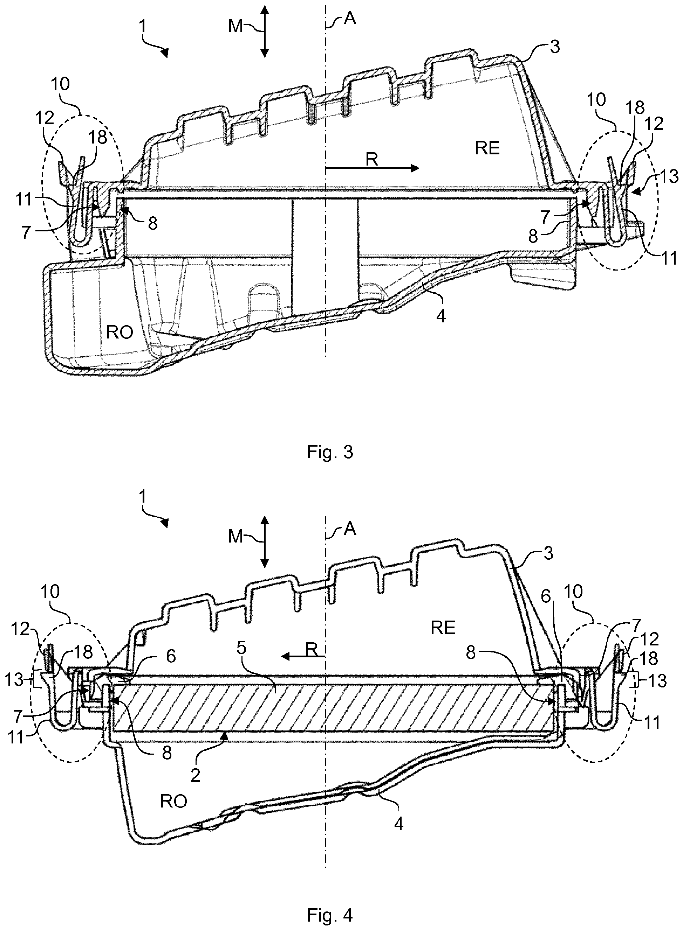

In den Figuren sind eine Ausführungsform eines Filtergehäuses sowie einer Filteranordnung mit einem Filterelement und Detaildarstellungen von Ausführungsformen für Schnappverbindungsvorrichtungen an einem Filtergehäuse dargestellt. Im Folgenden wird die Ausführungsform des Filtergehäuses 1 beziehungsweise der Filteranordnung gemeinsam beschrieben. In der Fig. 1 ist dazu eine perspektivische Ansicht eines Gehäuseoberteils 3 von oben mit Schnappverbindungsvorrichtungen 11 dargestellt. Die Fig. 2 zeigt eine perspektivische Sicht von unten in das Gehäuseoberteil 3, wie es in der Fig. 1 dargestellt ist, wobei ein eingesetztes Filterelement 2 sichtbar ist. In der Fig. 3 ist eine Schnittansicht eines Filtergehäuses 1 mit dem Gehäuseoberteil 3, wie es in den Fig. 1 und 2 angedeutet ist, und mit einem Gehäuseunterteil 4 gezeigt. Die Fig. 4 zeigt eine Filteranordnung mit einem entsprechenden Gehäuse 1 wie es in der Fig. 3 dargestellt ist mit einem eingesetzten Filterelement 2.

In den Fig. 3 und 4 erkennt man, dass ein Gehäuseunterteil 4 und ein Gehäuseoberteil 3 entlang einer axialen Montagerichtung M zusammengefügt und zum Öffnen wieder voneinander entfernt werden können. In den Fig. 3 und 4 ist eine Filtergehäuse- beziehungsweise Filteranordnungsachse A gestrichpunktet angedeutet. Das Filtergehäuse 1 dient zur Aufnahme eines Filterelements 2. Ein Filterelement 2 umfasst beispielsweise ein quaderförmiges Faltenpack aus einem Filtermaterial oder Filtermedium 5. Damit gegenüber dem Gehäuse 1 eine randseitige Abdichtung erfolgt, sodass ein Rohfluidbereich RO und einem Reinfluidbereich RE voneinander abgedichtet sind, umfasst das Filterelement 2 eine umlaufende rahmenförmige Dichtung 6. Die Dichtung 6 kann zum Beispiel ein PUR-Schaum umfassen. Die umlaufende Dichtung 6 ist dabei flexibel und in gewissen Maßen kompressibel, sodass eine insbesondere radiale Abdichtung gegen das Filtergehäuse 1 erfolgen kann.

Unter radial wird im Wesentlichen eine Richtung R verstanden, die in der Ebene des Filterelements 2 verläuft und das Filtergehäuse 1 von innen nach außen oder von außen nach innen durchläuft. In den Figuren ist eine radiale Richtung mit R bezeichnet.

Man erkennt in der Fig. 1 und der Fig. 2, dass der Deckel oder das Oberteil 3 des Gehäuses 1 einen Anschlussstutzen 22 für Reinfluid umfasst. Beim Betrieb der Filteranordnung strömt beispielsweise Rohluft durch einen in den Figuren nicht sichtbaren Anschlussstutzen in einen unteren Gehäusebereich (in Fig. 1 und 2 nicht dargestellt) als Rohluftbereich RO. Das Fluid strömt durch das Filterelement 2 hindurch in den Reinluftbereich RE, der im Wesentlichen von dem Deckel 3 umschlossen wird. Beim Durchtreten durch das Filtermedium 5 des Filterelementes 2 werden Partikel zurückgehalten, sodass in der Orientierung der Figuren im oberen Reinluftbereich RE am Anschlussstutzen 22 die gereinigte Luft abgegriffen werden kann und als Verbrennungsluft dem jeweiligen Motor eines Kfz's zugeführt wird. Die beiden Gehäuseteile 3, 4 können weitere Verstärkungsrippen 23 umfassen, die das beispielsweise aus Kunststoff gefertigte Gehäuse mechanisch verstärken.

In axialer Richtung werden die Gehäuseteile 3, 4 mit Hilfe von Schnappverbindungsvorrichtungen 10 gehalten. In den Fig. 1 und 2 erkennt man beispielsweise vier Schnappverbindungsvorrichtungen beziehungsweise die zugehörigen Schnapphaken 11. Die Schnapphaken 11 können in Ausnehmungen 13 korrespondierender Halteabschnitte 12 des unteren Gehäuseteils 2 eingreifen. In der Fig. 3 ist der gelöste Zustand der Schnappverbindungsvorrichtung 10 angedeutet, und in der Fig. 4 ist der montierte Zustand, also das verschlossene Gehäuse 10 mit dem Filterelement 2 dargestellt. Dabei hintergreifen Rastnasen 18 des Schnapphakens 11 die Ausnehmungen 13 des jeweiligen Halteabschnitts 12.

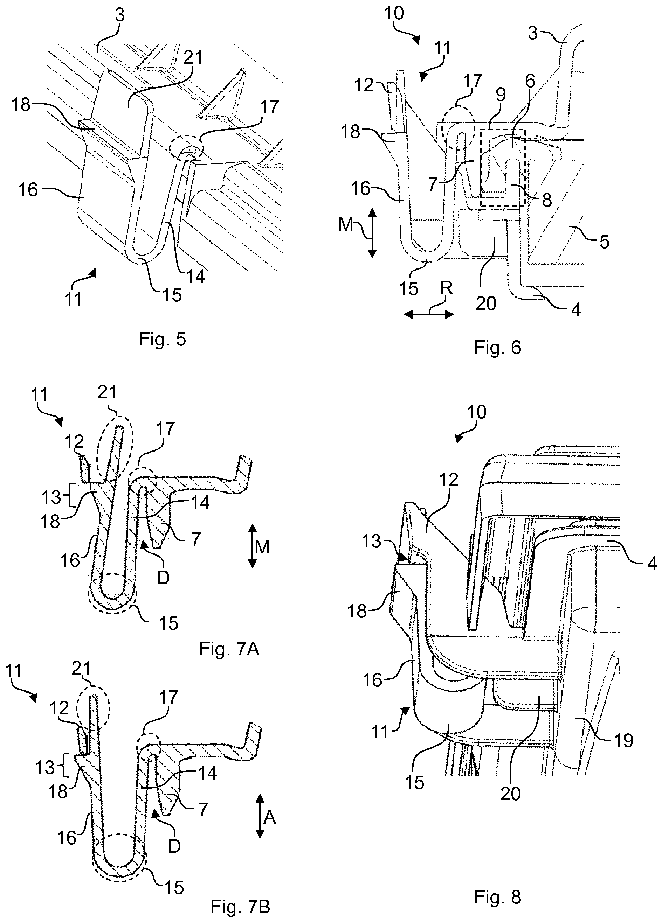

Neben der axialen Verspannung der beiden Gehäusehälften 3, 4 miteinander durch die Schnappverbindungsvorrichtungen 10 erfolgt eine radiale Abdichtung des Filterelements 2 gegenüber Randabschnitten der Gehäuseteile 3, 4. Dazu ist ein Dichtsteg 7 als erster Randabschnitt des ersten oberen Gehäuseteils 3 dargestellt. Der Dichtsteg 7 reicht in der Orientierung der Figuren 3 und 4 nach unten. Gegenüber von dem Dichtsteg 7 ist ein zweiter Randabschnitt 8 des unteren Gehäuseteils 4 vorgesehen, der Teil der Gehäusewand ist und auch als Steg bezeichnet werden kann. In der Fig. 3 sieht man wie die beiden Randabschnitte 7, 8 radial voneinander beabstandet sind. Der Bereich zwischen diesen Randabschnitten 7, 8 dient als Aufnahmeraum 9 für das Dichtelement 6. Dies erkennt man insbesondere in der Fig. 6. Das Dichtelement 6 ist zwischen den Dichtstegen 7 und 8 radial verpresst und führt somit zu einer Abdichtung. Das radiale Verpressen ergibt sich aus der Steifigkeit der Randabschnitte 7, 8 der Gehäuseteile 3, 4.

Eine Übertragung derartiger radialer Kräfte auf die Schnappverbindungsvorrichtung 10 ist unterbunden. In den Fig. 5 bis 8 sind Detaildarstellungen der Ausführungsform einer Schnappverbindungsvorrichtung 10, wie sie am Filtergehäuse 1 angeordnet sind, dargestellt. Die Fig. 5 zeigt eine perspektivische Detailansicht eines U-förmigen Schnapphakens 11. Der Schnapphaken 11 ist an dem Gehäuseoberteil 3 angeformt. Die Fig. 6 zeigt eine Querschnittsansicht einer Schnappverbindungsvorrichtung 10 im Detail. Wie bereits hinsichtlich der Fig. 3 und 4 erläutert wurde, ergibt sich ein Aufnahmebereich 9 für die um das Filtermedium 5 umlaufende Dichtung 6 aus den beiden Dichtstegen 7, 8. In der Orientierung der Fig. 6 ist rechtsseitig der Filtergehäuseinnenraum und linksseitig der Außenraum. Radial von innen nach außen verläuft ausgehend von dem Dichtsteg 7 ein radialer Steg 17, der den Schnapphaken 11 nach außen um einen Abstand D beabstandet (gezeigt in Fig. 7A und 7B).

Der Schnapphaken 11 umfasst insofern einen ersten inneren Schenkel 14, der von einem gebogenen Abschnitt 15 in einen zweiten Schenkel 16 übergeht. Ferner erkennt man die Rastnase 18, die radial nach außen reicht, und einen Handhabungsabschnitt 21, mit Hilfe dessen insbesondere der Schenkel 16 mit der Rastnase 18 radial nach innen verlagert werden kann. Es ist ferner der am unteren Gehäuseteil 4 angeformte Halteabschnitt 12 angedeutet. In der Darstellung der Fig. 6 hintergreift die Rastnase 12 eine Ausnehmung im Halteabschnitt 12 und fixiert axial, also in Montagerichtung M, die beiden Gehäuseteile 3, 4 miteinander.

Anhand der Figuren 7A und 7B kann der Verschnappungsvorgang zur Montage erläutert werden. Man erkennt in der Fig. 7A einen eingespannten Zustand des Schnapphakens 11, das heißt die Rastnase 18 liegt axial gesehen außerhalb der Ausnehmung 13 des Halteabschnitts 12. Es wirkt über die Schenkel 14, 16 eine radiale Kraft auf den Federabschnitt 15. Dies kann beispielsweise mit Hilfe des Handhabungsabschnitts 21 durch verlagern von in der Orientierung der Figuren 7A und 7B links nach rechts erfolgen. Wird nun, wie es in der Fig. 7B dargestellt ist, das obere Gehäuseteil 3 (vgl. Fig. 6) nach unten verlagert, schnappt aufgrund der Federwirkung des Federabschnitts 15 die Rastnase 18 in Eingriff mit dem Halteabschnitt 12. Dies ist in der Fig. 7B gezeigt. Der Schnapphaken 11 ist dann in seinem entspannten Zustand ohne zusätzliche oder nur mit einer geringfügigen Krafteinwirkung auf seine Grundform.

Die Schnappverbindungsvorrichtung 10 umfasst einen U-förmig ausgebildeten Schnapphaken 11 mit einem Federabschnitt 15 zwischen dem ersten Schenkel 14 und dem zweiten Schenkel 16 und einen Steg 17, der elastisch verformbar ist und von der Gehäusewand beabstandet ist. Der Federabschnitt 15 und Steg 17 nehmen unter elastischer Verformung die Kräfte auf, die bei der Montage und Demontage zum Verbinden der Gehäuseteile auftreten.

In der Fig. 8 sieht man perspektivisch von unten auf eine Ausführungsform einer Schnappverbindungsvorrichtung 10. Um die Bewegung des Schnapphakens 11 radial nach außen zu unterstützen, ist von einer Gehäusewand 19 des unteren Gehäuseteils 4 aus eine radial nach außen gerichtete Führungsrippe 20 vorgesehen. Die Führungsrippe 20 drückt in der Orientierung der Fig. 8 von rechts nach links gegen den verdeckt dargestellten inneren Schenkel 14 des Schnapphakens 11. Dadurch wird der äußere Schenkel 16 mit der Rastnase 18 in die Ausnehmung oder Öffnung 13 des Halteabschnitts 12 gedrückt. Somit erfolgt eine sichere selbsttätige Verrastung und Verriegelung in axialer Richtung.

Beim Auseinandernehmen oder Demontieren der Gehäuseteile 3, 4 voneinander werden diese relative zueinander axial verlagert. Die Rippe 20 hat vorzugsweise eine Form derart, dass die Rippe 20 den Schnapphaken 11 blockiert und der Monteur zusätzlich - zum Beispiel mit Hilfe des Handhabungsabschnitts 21 - den Schnapphaken an der Rippe 20 vorbeiführen muss, um die Rastnase 18 aus der Ausnehmung 13 zu nehmen.

Die Entkoppelung von axial wirkenden Kräften auf die Elemente der Schnappverbindungsvorrichtung von radial wirkenden Kräften auf das Dichtelement ermöglicht eine einfachere Ausgestaltung der Schnappverbindungsvorrichtung. Es kann insofern Material eingespart werden und eine flexiblere Ausgestaltung, insbesondere des Schnapphakens, erzielt werden. Die U-förmige Ausgestaltung ist dabei besonders günstig und flexibel. Allerdings sind auch andere Verschnappungsmechanismen denkbar. So kann auch bei tiefen Temperaturen zuverlässig eine Montage und Demontage von Filtergehäusen erfolgen.

### Verwendete Bezugszeichen:

- 1: Filtergehäuse
- 2: Filterelement
- 3: Gehäuseoberteil
- 4: Gehäuseunterteil
- 5: Filtermedium
- 6: Dichtelement
- 7, 8: Dichtsteg/Randabschnitt
- 9: Aufnahmebereich
- 10: Schnappverbindungsvorrichtung
- 11: Schnapphaken
- 12: Halteabschnitt
- 13: Ausnehmung
- 14: Schenkel
- 15: Federabschnitt
- 16: Schenkel
- 17: Steg
- 18: Rastnase
- 19: Gehäusewandabschnitt
- 20: Führungsrippe/Blockiermittel
- 21: Handhabungsabschnitt
- 22: Anschlusstutzen
- 23: Verstärkungsrippe
- A: Gehäuseachse
- D: Abstand
- M: Montagerichtung
- R: Radialrichtung
- RO: Rohluftbereich
- RE: Reinluftbereich

## Patentansprüche

1. Filteranordnung mit einem Filtergehäuse (1), einem Filterelement (2) und einem das Filterelement (2) umlaufenden Dichtelement (6), mit einem ersten Gehäuseteil (3) und einem zweiten Gehäuseteil (4), welche in einer axialen Montagerichtung (M) zusammenfügbar und voneinander trennbar sind, wobei ein erster Randabschnitt (7) des ersten Gehäuseteils (3) und ein zweiter Randabschnitt (8) des zweiten Gehäuseteils (4) einen Aufnahmebereich (9) für das Dichtelement (6) derart bilden, dass das Dichtelement (6) zwischen den Randabschnitten (7, 8) radial dichtend eingespannt ist, und mit einer Schnappverbindungsvorrichtung (10) zum axialen Verspannen der Gehäuseteile (3, 4), welche derart an die Gehäuseteile (3, 4) angeformt ist, dass eine mit Hilfe der Randabschnitte (7, 8) auf das Dichtelement (6) radial (R) wirkende Anpresskraft oder Klemmkraft von der Schnappverbindungsvorrichtung (10) entkoppelt ist, wobei ein dem ersten Randabschnitt (7) zugeordneter federnder Schnapphaken (11) der Schnappverbindungsvorrichtung (10) derart radial von dem ersten Randabschnitt (7) nach außen beabstandet ist, dass eine durch den Randabschnitt (7) auf das Dichtelement (6) radial nach innen gerichtete Anpresskraft oder Klemmkraft von dem Schnapphaken (11) entkoppelt ist, wobei der Schnapphaken (11) U-förmig ausgebildet ist und einen ersten Schenkel (14), einen Federabschnitt (15) und einen zweiten Schenkel (16) umfasst, wobei der erste Schenkel (14) mit Hilfe eines radialen Stegs (17) von einer Gehäusewand des ersten Gehäuseteils (3) beabstandet axial entlang der Gehäusewand verläuft.

2. Filteranordnung nach Anspruch 1, wobei der erste und der zweite Randabschnitt (7, 8) jeweils einen umlaufenden Dichtsteg umfasst und die Dichtstege (7, 8) derart radial versetzt den Aufnahmebereich (9) begrenzen, dass das Dichtelement (6) radial zwischen den Dichtstegen (7, 8) verklemmt ist.

3. Filteranordnung nach einem der Ansprüche 1 oder 2, wobei die Schnappverbindungsvorrichtung (10) einen Schnapphaken (11) und einen Halteabschnitt (12) mit einer Ausnehmung (13) umfasst, wobei der Schnapphaken (11) den Halteabschnitt (12) im montierten Zustand formschlüssig hintergreift.

4. Filteranordnung nach Anspruch 2 und 3, wobei der Schnapphaken (11) von dem äußeren Dichtsteg (7) radial nach außen beabstandet angeordnet ist.

5. Filteranordnung nach einem der Ansprüche 1 bis 4, wobei der zweite Schenkel (16) eine Rastnase (18) zum Eingriff in die Ausnehmung (13) des Halteabschnitts (12) umfasst, und der erste Schenkel (14), der Federabschnitt (15) und der zweite Schenkel (16) die Rastnase (18) im montierten Zustand radial nach außen federnd in die Ausnehmung (13) drückt.

6. Filteranordnung nach Anspruch 5, wobei die Schnappverbindungsvorrichtung (10) derart ausgestaltet ist, dass die Rastnase (18) bei einem Zusammenfügen der Gehäuseteile (3, 4) in Montagerichtung (M) selbsttätig radial (R) in die Ausnehmung (13) rutscht.

7. Filteranordnung nach einem der Ansprüche 1 bis 6, wobei das zweite Gehäuseteil (4) einen von der Gehäusewand (19) abstehenden Führungsabschnitt (20) umfasst, welcher bei einem Zusammenfügen oder bei einem Voneinandertrennen der Gehäuseteile (3, 4) in Montagerichtung (M) den ersten Schenkel (14) radial nach außen drückt.

8. Filteranordnung mit einem Filtergehäuse (1) nach einem der Ansprüche 5 bis 7, einem Filterelement (2) und einem das Filterelement (2) umlaufenden Dichtelement (6), welches in dem Aufnahmeraum (9) radial verpresst ist, wobei der zweite Schenkel (16) einen Handhabungsabschnitt (21) zum Verlagern der Rastnase (18) aus der Ausnehmung (13) radial nach innen hat.

## Claims

1. Filter arrangement having a filter housing (1), a filter element (2) and a sealing element (6) surrounding the filter element (2), having a first housing part (3) and a second housing part (4) which can be joined together and separated from one another in an axial mounting direction (M), wherein a first edge section (7) of the first housing part (3) and a second edge section (8) of the second housing part (4) form a receiving area (9) for the sealing element (6) in such a way that the sealing element (6) is clamped in a radially sealing manner between the edge sections (7, 8), and having a snap-fit connection device (10) for axially clamping the housing parts (3, 4), which is integrally formed on the housing parts (3, 4) in such a way that a contact force or clamping force radially (R) acting on the sealing element (6) with the aid of the edge sections (7, 8) is decoupled from the snap-fit connection device (10), wherein a resilient snap-in hook (11) associated with the first edge section (7) of the snap-fit connection device (10) is radially spaced outwards from the first edge section (7) in such a way that a contact force or clamping force directed radially inwards onto the sealing element (6) by the edge section (7) is decoupled from the snap-in hook (11), wherein the snap-in hook (11) is U-shaped and comprises a first leg (14), a spring section (15) and a second leg (16), wherein the first leg (14) spaced apart with the aid of a radial web (17) from a housing wall of the first housing part (3) extends axially along the housing wall.

2. Filter arrangement according to claim 1, wherein the first and the second edge sections (7, 8) each comprise a circumferential sealing web and the sealing webs (7, 8) radially offset delimit the receiving area (9) in such a way that the sealing element (6) is clamped radially between the sealing webs (7, 8).

3. Filter arrangement according to one of the claims 1 or 2, wherein the snap-fit connection device (10) comprises a snap-in hook (11) and a holding section (12) with a recess (13), wherein the snap-in hook (11) positively engages behind the holding section (12) in the assembled state.

4. Filter arrangement according to claims 2 and 3, wherein the snap-in hook (11) is disposed radially outwardly spaced apart from the outer sealing web (7).

5. Filter arrangement according to one of the claims 1 to 4, wherein the second leg (16) comprises a latching lug (18) for engagement in the recess (13) of the holding section (12), and the first leg (14), the spring section (15) and the second leg (16) resiliently press the latching lug (18) radially outwards into the recess (13) in the assembled state.

6. Filter arrangement according to claim 5, wherein the snap-fit connection device (10) is designed in such a way that, when the housing parts (3, 4) are joined together, the latching lug (18) automatically slips radially (R) into the recess (13) in the mounting direction (M).

7. Filter arrangement according to one of the claims 1 to 6, wherein the second housing part (4) comprises a guide section (20) projecting from the housing wall (19) and pressing the first leg (14) radially outwards in the mounting direction (M), when the housing parts (3, 4) are joined together or separated from one another.

8. Filter arrangement having a filter housing (1) according to one of claims 5 to 7, a filter element (2) and a sealing element (6) disposed around the filter element (2) and pressed radially into the receiving space (9), wherein the second leg (16) has a handling section (21) for displacing the latching lug (18) radially inwards out of the recess (13).

## Revendications

1. Agencement de filtre avec un boîtier de filtre (1), un élément filtrant (2) et un élément d'étanchéité (6) entourant l'élément filtrant (2), avec une première partie de boîtier (3) et une seconde partie de boîtier (4) qui peuvent être assemblées et séparées dans un sens de montage (M) axial, un premier tronçon de bord (7) de la première partie de boîtier (3) et un second tronçon de bord (8) de la seconde partie de boîtier (4) formant une zone de réception (9) pour l'élément d'étanchéité (6) de sorte que l'élément d'étanchéité (6) soit serré de manière étanche en sens radial entre les tronçons de bord (7, 8), et avec un dispositif d'assemblage à encliquetage (10) servant à serrer les parties de boîtier (3, 4) en sens axial et formé sur les parties de boîtier (3, 4) de manière à ce qu'une force de pression ou de serrage exercée en sens radial (R) à l'aide des tronçons de bord (7, 8) sur l'élément d'étanchéité (6) soit découplée du dispositif d'assemblage à encliquetage (10), un crochet d'encliquetage élastique (11) affecté au premier tronçon de bord (7) du dispositif d'assemblage à encliquetage (10) étant espacé vers l'extérieur en sens radial du premier tronçon de bord (7) de sorte qu'une force de pression ou de serrage exercée en sens radial vers l'intérieur au moyen du tronçon de bord (7) sur l'élément d'étanchéité (6) soit découplée du crochet d'encliquetage (11), le crochet d'encliquetage (11) étant exécuté en forme de U et comprenant une première branche (14), une section à ressort (15) et une seconde branche (16), la première branche (14) espacée au moyen d'une nervure radiale (17) d'une paroi de boîtier de la première partie de boîtier (3) s'étendant en sens axial le long de cette paroi de boîtier.

2. Agencement de filtre selon la revendication 1, le premier et le second tronçons de bord (7, 8) comprenant respectivement une nervure d'étanchéité circulaire et les nervures d'étanchéité (7, 8) étant décalées en sens radial limitant la zone de réception (9) de manière à ce que l'élément d'étanchéité (6) soit serré en sens radial entre les nervures d'étanchéité (7, 8).

3. Agencement de filtre selon l'une des revendications 1 ou 2, le dispositif d'assemblage à encliquetage (10) comprenant un crochet d'encliquetage (11) et une section de retenue (12) avec un évidement (13), le crochet d'encliquetage (11) étant craboté sur la section de retenue (12) en position montée.

4. Agencement de filtre selon les revendications 2 et 3, le crochet d'encliquetage (11) étant espacé de la nervure extérieure (7) en sens radial vers l'extérieur.

5. Agencement de filtre selon l'une des revendications 1 à 4, la seconde branche (16) comprenant un ergot d'encliquetage (18) pouvant s'engrener dans l'évidement (13) de la section de retenue (12), et la première branche (14), la section à ressort (15) et la seconde branche (16) pressant l'ergot d'encliquetage (18), en position montée, en sens radial vers l'extérieur, de manière élastique dans l'évidement (13).

6. Agencement de filtre selon la revendication 5, le dispositif d'assemblage à encliquetage (10) étant exécuté de manière à ce que, en cas d'assemblage des parties de boîtier (3, 4), l'ergot d'encliquetage (18) glisse automatiquement en sens radial (R), dans le sens de montage (M), dans l'évidement (13).

7. Agencement de filtre selon l'une des revendications 1 à 6, la seconde partie de boîtier (4) comprenant une section de guidage (20) faisant saillie de la paroi de boîtier (19) et pressant, en cas d'assemblage ou de séparation des parties de boîtier (3, 4), la première branche (14) en sens radial (R) vers l'extérieur, dans le sens de montage (M).

8. Agencement de filtre avec un boîtier de filtre (1) selon l'une des revendications 5 à 7, un élément filtrant (2) et un élément d'étanchéité (6) entourant l'élément filtrant (2) et étant pressé en sens radial dans l'espace de réception (9), la seconde branche (16) comportant une section de manipulation (21) permettant de dégager l'ergot d'encliquetage (18) de l'évidement (13) en sens radial vers l'intérieur.
